# EUROPEAN PATENT APPLICATION

(11) **EP 2 105 072 A1**
(43) Date of publication of application: **30.09.2009**
(21) Application number: 09155688.6
(22) Date of filing: 20.03.2009
(51) Int. Cl.: A47J 31/06, A47J 31/46

(54) **Method and apparatus for preparing beverages**

(30) Priority: 28.03.2008 EP 08075224
(71) Applicant: VEROMATIC INTERNATIONAL B.V., 3316 GZ Dordrecht (NL)
(72) Inventor: Verhoef, Kees, 3363 CA, Sliedrecht (NL)
(74) Representative: Brookhuis, Hendrik Jan Arnold

(57) **Abstract**

The invention relates to a method for preparing at ambient pressure a beverage having a cream top layer, in particular a beverage such as coffee or chocolate milk, and to a product for preparing such a beverage at ambient pressure. In a method according to the invention a conduit (6) is provided, which extends in an axial direction between an inlet (8) and an outlet (9) in a flow direction (10), and which defines a passage having a flow through area. A first part of an intermediate beverage product is transported via the conduit (6) and through a first flow though area. Then, the passage in the conduit (6) is reduced to a second flow through area which is shaped such that it enables small sized bubbles for forming a cream top layer to pass through the passage while large sized bubbles are broken down into small sized bubbles fit for forming a cream top layer and for passing through the passage.

## Description

### FIELD OF THE INVENTION

The invention relates to a method for preparing at ambient pressure a beverage having a cream top layer, in particular a method for preparing a beverage such as coffee, cappuccino or chocolate milk by mixing intermediate beverage products. The invention furthermore relates to an ambient pressure brewing apparatus for preparing such a beverage. Methods and apparatuses for preparing beverages such as coffee or chocolate milk are generally known from the art.

### BACKGROUND OF THE INVENTION

The preparation of a beverage is a complicated process in which starting elements, such as water, granulate, extract, etc, are mixed, into an (liquid) intermediate beverage product which is processed, transported via conduits and ejected into a receptacle such as a cup, to form the final beverage product.

For preparing beverages, distinction is made between high pressure brewing apparatuses and ambient pressure brewing apparatuses.

With a high pressure apparatus the beverage is produced at an overpressure of about 7 bar or more with respect to the ambient pressure, i.e. 1 atm under normal conditions. A fluid is forced through a granulate at a high pressure of 7 bar or more, to enhance the extraction process. In addition, the intermediate beverage product, which is substantially free from bubbles, may subsequently be forced under said high pressure through a small opening to generate small bubbles for forming a cream layer. To enable processing under high pressure, the apparatuses are provided with high pressure conduits and valves which are able to contain and transport fluids under a high pressure. This makes production of these apparatuses relatively complicated and expensive.

With ambient pressure brewing apparatuses the brewing or mixing of the beverage takes place at ambient pressure, which in this context should be interpreted as about atmospheric pressure, i.e. about 1 atm, or at a slight overpressure of up to 1,5 bar. In contrast with high pressure apparatuses, low pressure valves and conduits are used for containing the fluids at ambient pressures. Therefore these apparatuses are relatively simple and can be produced at low costs.

In contrast with high pressure brewing processes, during the preparation of a beverage at ambient pressure bubbles of varying size emerge in the intermediate beverage product. For example, during the extracting and/or mixing of starting elements, for example particles in the form of coffee granulate and a fluid in the form of hot water, bubbles are formed. These bubbles vary in size, and may have a diameter from 0,1 mm up to for example 12 mm. These bubbles form a foam layer on the surface of the beverage.

A foam layer comprising bubbles of varying sizes is unwanted since it has a negative influence on the texture and therefore the organoleptic sensation of the beverage. Furthermore, a beverage product comprising large bubbles, for example having a diameter of 1,5 mm or more, is unwanted since most consumers do not appreciate large bubbles.

Consumers however do appreciate the organoleptic sensation of a beverage provided with a cream layer, which is formed by a foam consisting of small bubbles having substantially similar dimensions, in particular a cross section of about 0,1 mm, up to about 0,5 mm,. However, managing the size of the bubbles during the preparation of the beverage is a complicated process.

### SUMMARY OF THE INVENTION

It is an object of the present invention to provide a method for preparing beverages at ambient pressure, the beverage having a cream top layer, in which bubbles having a diameter larger than 1,5 mm are eliminated altogether or occur to a greatly reduced extent. Another object of the invention is to provide a simple apparatus for producing a beverage at ambient pressure, the beverage having a cream top layer, in which bubbles having a diameter larger than 1,5 mm are eliminated altogether or occur to a greatly reduced extent..

This object is achieved by providing according to the present invention a method according to claim 1 and an apparatus according to claim 6.

When preparing a beverage with a method according to the invention, the first part of the intermediate beverage product is transported via the conduit and through the first flow though area. The passage in the conduit is reduced to a second flow through area of a predetermined size and shape, which second flow through area is smaller than the first flow through area. The second part of the intermediate beverage product, comprising the bubbles, is transported through this second flow through area.

The reduced flow through area is dimensioned such that small sized bubbles are allowed to pass through the passage while large sized bubbles are prevented from passing through the passage. Instead, these large sized bubbles are broken down into bubbles having a smaller size fit to form a cream layer, and which allows them to pass through the second flow through area.

The first and second part of the intermediate beverage product are subsequently combined into the final beverage for consumption.

Thus, by preparing a beverage according to the invention, large bubbles are removed from the intermediate beverage product, and small bubbles, of substantially the same dimension remain for forming a cream layer on the final beverage. The foam, comprising large sized bubbles, present on the intermediate beverage product is turned into a cream layer on the final beverage product.

In a further preferred embodiment according to the invention, the conduit and/or the second flow through area are formed for generating turbulence in the flow of intermediate beverage product for braking down bubbles present in the second part of intermediate beverage product into smaller bubbles.

An apparatus according to the invention comprises a conduit defining a passage allowing the intermediate beverage product to pass and means for reducing the passage in the conduit from a first flow through area to a second flow through area, which second flow through area has a predetermined size and shape, and which second flow through area is smaller than the first flow through area.

When preparing a beverage, a first part of an intermediate beverage product passing through the conduit will flow via the first flow through area. While the first part of the intermediate beverage product flows through the passage, the flow through area is reduced to form the second flow through area. Thus, the second part of the intermediate beverage product passes through the second, reduced flow through area.

The first flow through area is especially suited for transporting relatively large volumes through the conduit, thus enabling short preparation times.

The second flow through area has a predetermined size and shape which is independent from the actual flow. The size of the second flow through area is smaller than the size of the first flow through area. The second flow through area is shaped such that it enables small sized bubbles for forming a cream top layer to pass through the passage while large sized bubbles are stopped and broken down into small sized bubbles fit for forming a cream top layer and for passing through the passage.

Thus, by letting a beverage at ambient pressure flow through a conduit according to the invention, large bubbles are broken down into smaller bubbles fir to form a cream layer on the final beverage, the organoleptic sensation of which is appreciated by consumers.

Furthermore, an apparatus for preparing a beverage according to the invention is able to produce such a beverage at ambient pressure.

Furthermore, the size of the bubbles is managed in a simple manner and does not require a complicated operating system or processing of the intermediate beverage product under high pressure.

In a further embodiment of an apparatus according to the invention, the conduit and/or the second flow through area are formed such the they generate turbulence in the flow of intermediate beverage product. The turbulence in the flow of beverage product brakes down larger bubbles were not removed by the reduced flow through area.

Further objects, embodiments and elaborations of the method and the apparatus according to the invention will be apparent from the following description, in which the invention is further illustrated and elucidated on the basis of a number of exemplary embodiments, with reference to the drawings.

### BRIEF DESCRIPTION OF THE DRAWINGS

Fig. 1 shows a side view in cross section of an apparatus according to the invention;
Fig. 2 shows a view in perspective in cross section of a conduit of the apparatus of Fig. 1 in more detail;
Fig. 3 shows a view in axial direction of a conduit of the apparatus of Fig. 1
Fig. 4 shows a simplified side view in cross section of a conduit of the apparatus of Fig. 1 with the throttle body in the rest position; and
Fig. 5 shows a simplified side view in cross section of a conduit of the apparatus of Fig. 1 with the throttle body in the throttle position.

### DETAILED DESCRIPTION OF THE INVENTION

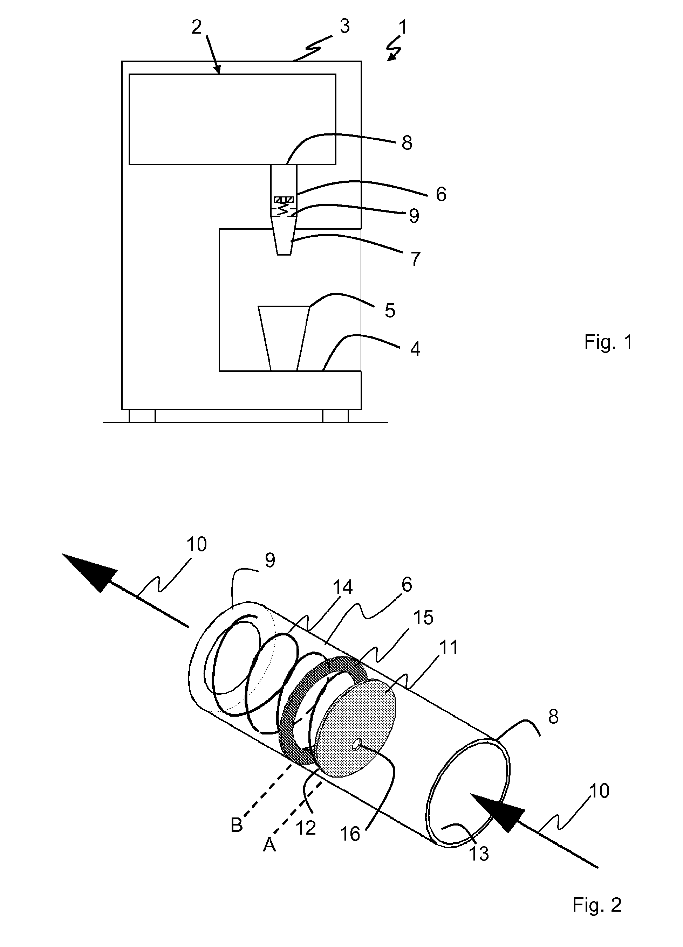

Figure 1 shows a side view in cross section of an apparatus 1 for preparing beverages at an ambient pressure, in particular beverages such as coffee, cappuccino, or chocolate milk, according to the invention.

The apparatus 1 comprises components 2 for preparing the beverage, an apparatus housing 3 for shielding the components, and a plateau 4 for supporting one or more cups 5. The parts for preparing the beverage comprises a mixing chamber for preparing a beverage by mixing beverage starting elements, for example particles in the form of coffee granulate and a fluid in the form of hot water. The parts for preparing the beverage are connected via a conduit 6 to a nozzle 7, which is mounted above the plateau 4.

The conduit 6 extends in an axial direction between an inlet 8 and an outlet 9, for transporting a fluid from the inlet 8 to the outlet 9 in a flow direction, the latter indicated with arrows 10 in Fig. 2. The conduit 6 defines a passage having a flow through area, i.e. a cross section of the conduit perpendicular to the flow direction.

The apparatus 1 further comprises means for reducing the passage in the conduit 6 from a first flow through area to a second flow through area, which second flow through area is smaller than the first flow through area.

For preparing a beverage the starting elements are mixed in the mixing chamber, after which the intermediate beverage product is transported via the conduit 6 to the nozzle 7, for filling the cup 5 supported by the plateau 4.

Without whishing to be bound to any theory, it is believed that when an intermediate beverage product is transported from a reservoir or preparation chamber into and/or through a conduit, the bubbles present in the fluid will accumulate in the upstream part of the intermediate beverage product, while the downstream part of the intermediate beverage product is predominantly free of bubbles.

In a method according to the invention a beverage having a cream top layer, in particular a beverage such as coffee or chocolate milk, is prepared by breaking down large sized bubbles in an intermediate beverage product, into small sized bubbles of substantially similar dimensions, which small sized bubbles form the cream layer on the final beverage, The method comprises several steps.

First, an intermediate beverage product is prepared by mixing beverage starting elements, for example coffee and milk powder.

A conduit 6 is provided, the conduit extending in an axial direction between an inlet 8 and an outlet 9 for transporting the intermediate beverage product from the inlet to the outlet in a flow direction 10, the conduit defining a passage allowing the intermediate beverage product to pass.

The first part of the intermediate beverage product is transported at ambient pressure, i.e. 1 atm or a slight overpressure of up to 1,5 bar, via the conduit 6 and through the first flow though area in the flow direction 10. While the first part of the intermediate beverage product is transported via the conduit, the passage in the conduit 6 is reduced from the first flow through area to a predetermined second flow through area, which second flow through area is smaller than the first flow through area. The second part of the intermediate beverage product is transported at ambient pressure via the conduit 6 and through the second flow through area in the flow direction 10. The second flow through area is of such a size and form that large bubbles are prevented from passing through the flow through area. The large sized bubbles are broken down by the beverage product flowing through the second flow through area into smaller sized bubbles, which are taken by the flow. Both the first and second part of the intermediate beverage product are combined to form the final beverage. Thus a beverage is created having a cream top layer.

In a preferred method according to the invention, the second flow through area and the conduit are shaped for in combination generating turbulence in the second part of beverage product passing the second flow through area, for braking down bubbles in the second part of beverage product into smaller bubbles. For example, the second flow through area may comprise one or more openings in the centre part of the conduit, such that the second part of the intermediate beverage product will diverge after passing the second flow through area, generating turbulence in the flow of intermediate beverage product. In a further embodiment, a section of the conduit directly following the second flow through area may be provided with an non symmetrical cross section or with obstacles such as a grate, to generate extra turbulence in the flow of intermediate beverage product.

In a preferred method, the provided conduit is made out of a flexible material, such as for example rubber tube. The first flow through area is defined by the passage, the cross section of the tube. The flow though area can be reduced from a first flow through area to a second flow through area by pinching the conduit in a radial direction. This method provides a simple and easy way for providing a conduit for reducing the flow through area.

In an alternative method, the passage in the conduit is reduced from the first flow through area to the second flow through area by moving a throttle body within the conduit from a rest position defining the first flow through area into a throttle position, defining the second flow through area. The use of a throttle body provides a simple and reliable manner of reducing the flow through area of the passage defined by the conduit.

In a further preferred method, the throttle body is moved into the throttle position under a force applied to the throttle body by the first part of the intermediate beverage product flowing via the conduit, in particular via the first flow through area, in the flow direction. Thus no extra drive or control system is needed for activating and/or operating the throttle body.

For example, in the preferred embodiment shown in figs. 2-5, the means for reducing the passage comprise a throttle body 11. The throttle body 11 is moveable supported in the conduit 6 for movement in an axial direction of the conduit between the rest position, which is indicted with an "A", and the throttle position, which is indicated with a "B", downstream of the rest position. When an intermediate beverage product lows through the conduit, the throttle body is moved from the rest position into the throttle position by the flow of intermediate beverage product.

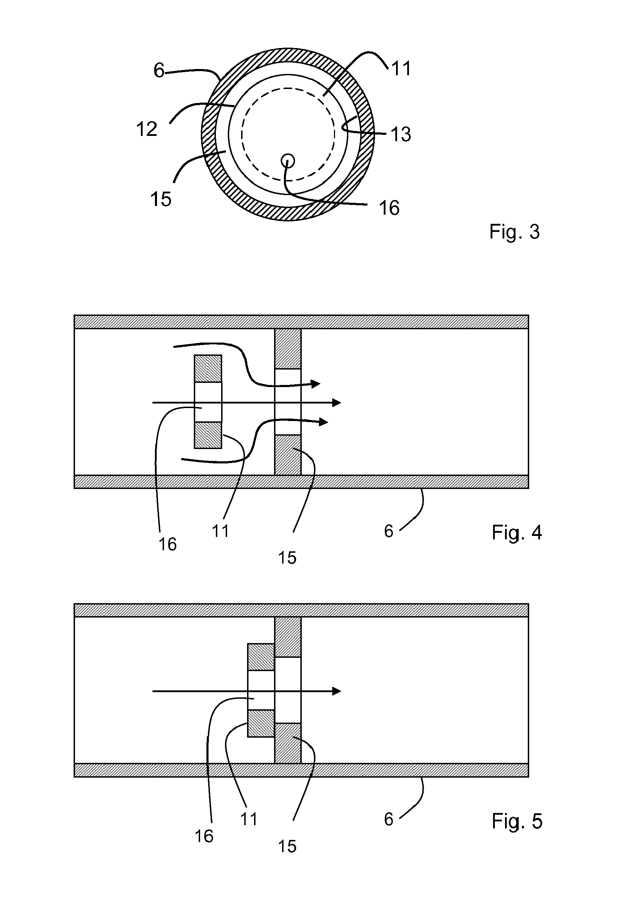

Figs. 2 and 4 show the throttle body 11 in its rest position,. In the rest position the throttle body defines a passage in the conduit 6 having a first flow through area. The throttle body 11 extends in a direction perpendicular to the axial direction of the conduit 6 for blocking part of the conduit and thus defining the first passage having a flow through area between the peripheral edge 12 of the throttle body and the inside surface 13 of the conduit. In the embodiment shown, the first flow through area furthermore comprises the opening 16 in the throttle body.

In the throttle position the throttle body 11 defines a passage in the conduit 6 having a second flow through area (smaller than the first one), in this particular embodiment the opening 16 in the throttle body 11.In the embodiment shown, the conduit 6 further comprises a seat 15 for supporting the throttle body 11 when in the throttle position. The seat 15 extends along the inside surface 13 of the conduit 6 for supporting part of the peripheral edge 12 of the throttle body 11 such that the first passage between the peripheral edge of the throttle body and the inside surface of the conduit is substantially blocked when the throttle body is in the throttle position. Since the throttle body is positioned against the seat when in the second position, the second flow through area has predetermined size and shape which is similar for the second part of each intermediate beverage product.

Fig. 3 depicts a view of the conduit 6 seen in the flow direction 10, upstream from the rest position A of the throttle body 11. The conduit 6 is shown in section and is therefore hatched. Concentrically positioned within the conduit the throttle body 11 is shown, including the opening 16. The seat 15 is partially obscured by the throttle body 11. The inner circumference of the seat 15 is indicated with a broken line since, when seen from this position, it is covered by the throttle body 11.

The first flow through area is defined between the peripheral edge 12 of the throttle body 11 and the inner surface 13 of the conduit 6, when the throttle body 11 is in the rest position. In the embodiment shown, the opening 16 is also part of the flow through area. As can clearly be seen in Fig. 3, the first flow through area is, at least substantially, blocked by the seat 15 when the throttle body 11 is in the throttle position B. Thus, when the throttle body 11 is in the rest position, the opening 16 forms the second flow through area.

When an intermediate beverage product is transported though the conduit, the first part of the beverage, comprising relatively little or no large bubbles, flows through the first passage. The intermediate beverage product is allowed to flow along the sides of the throttle body 11 as well as through an opening 16 in the throttle body, as shown in fig. 4. The first part of the intermediate beverage product can thus pass relatively quickly through the conduit via the flow through area of the first passage without for example the need of a substantial pressure difference.

The flow of the first part of the intermediate beverage product exerts a force upon the throttle body, under which force the throttle body is moved into the throttle position, reducing the passage in the conduit from a first flow through area to the, smaller, second flow through area.

The second part of the intermediate beverage product, comprising most of the bubbles, is passed through the second, reduced flow through area. The reduced flow through area prevents large bubbles from passing through the conduit and breaks larges bubbles into small bubbles. A fluid with small bubbles of substantially equal dimension, forming a layer of cream on the surface of the fluid, remains.

When the second part of the intermediate beverage product has passed through the conduit, the throttle body returns to the rest position by the force enacted upon it by the resilient body.

An apparatus 1 according to the invention can therefore provide at an ambient pressure a beverage with a cream layer consisting of small bubbles. Furthermore, the throttle body 11 is a simple device, which can be produced at low cost, and which does not need for example a monitoring system for operating.

Because the throttle position of the throttle body 11 is situated downstream of its rest position, the throttle body 11 moves along with the intermediate beverage product when moving from the rest position to the throttle position. Thus the throttle body can, in comparison with a throttle body having an upstream throttle position, relatively easy be moved into the throttle position since the throttle body does not need to overcome the forces exerted upon it by the flowing intermediate beverage product.

In the embodiment shown, the throttle body 11 is resiliently supported by a resilient body 14 in the form of a spring. Alternatively, the resilient body can be formed by a plunger, rubber material, etc. The resilient body 14 at least exerts a force on the throttle body 11 in an upstream direction 10 when the throttle body is in a position downstream of the rest position, for moving the throttle body towards the rest position. Thus the throttle body is moveable supported in a simple and reliable manner. In an alternative embodiment, the throttle body may for example be mounted on a telescopic body such as a plunger-cylinder assembly which can be activated by a control system for moving the throttle body into the throttle position when the first part of the intermediate beverage product has passed the first flow through area.

In a preferred embodiment, the throttle body is supported such that that the throttle body 11 is moved towards the throttle position under the pressure of a liquid intermediate beverage product flowing through the conduit 6. While the throttle body 11 moves into the rest position the first part of the intermediate beverage product can flow through the first passage. For example, the resilient body 14 may be designed to provide a support force which is smaller than the force enacted by the flowing intermediate beverage product against the throttle body 11 at about an ambient pressure. Thus the throttle body 11 is moved towards the throttle position by the intermediate beverage product flowing through the conduit, and no separate drive or control system is needed.

Preferably, only a small pressure difference is needed to move the throttle body 11 into the throttle position. In a preferred embodiment, the throttle body 11 is moved from the rest position to the throttle position when the pressure difference between the conduit 6 directly upstream of the throttle body 11 and the conduit 6 directly downstream of the body 11 is in the range of 0,9 bar to 0,2 bar, for example is 0,5 bar. Thus, when an intermediate beverage product is passed through the conduit 6, and no special provisions such as actuators, a drive, etc. are needed for operating the throttle body.

It is noted that a flow through area is the total area in a cross section of the conduit through which the fluid flows when passing that section of the conduit. Thus, a flow through area may for example comprise multiple circular openings in a valve or be a ring shaped opening inbetween the circumference of the conduit and a concentrically positioned body in the conduit.

The second flow through area is of a predetermined size and shape, fit for breaking down large sized bubbles in an intermediate beverage product, such that only small sized bubbles of substantially similar dimensions remain for forming the cream layer on the final beverage. Thus the opening or openings making up the second flow through area are all of a size that allows passage of small sized bubbles only. Furthermore, the size of the second flow through area is predetermined, and is not influenced by for example the speed at which the beverage flows through the conduit. Thus, by letting the beverage flow through a conduit according to the invention, bubbles up to a predetermined maximum size are obtained.

In an embodiment according to the invention the throttle body and/or the seat define a second passage of the conduit having a flow through area that is smaller than the flow through area of the first passage, when the throttle body is in the throttle position. In the throttle position the throttle body 11 is supported by the seat 15. In the embodiment shown the seat 15 has the form of a ring shaped ridge or rib, extending from the inside surface 13 of the conduit. The seat 15 runs full circle along the inside surface 13 of the conduit 6 and supports the entire peripheral edge 12 of the throttle body 11, preventing beverage from passing along the sides of the throttle body. Thus, when the throttle body is in the throttle position, the flow through area of the conduit 6 is reduced to the opening 16 defined by the throttle body 11, forming the second flow through area. In the embodiment shown, the throttle body 11 defines one opening 16 for forming the second flow through area when the throttle body is in the throttle position. In a further embodiment, the throttle body may also comprise multiple openings.

In a further embodiment according to the invention, the throttle body and the seat cooperate to form at least one opening for forming the second flow through area when the throttle body is in the throttle position. The at least one opening can for example be formed by the seat supporting only sections of the throttle body, such that when the throttle body is in the throttle position, opening(s) remain between the throttle body and the seat or inside wall of the conduit, forming the second flow through area.

Alternatively, the seat may define at least one opening for forming the second flow through area when the throttle body is in the throttle position, possibly in addition to the at least one opening in the throttle body, or the throttle body and the seat may cooperate to form at least one opening for forming the second flow through area when the throttle body is in the throttle position, also in addition to at least one opening in the throttle body and/or at least one opening in the seat.

The conduit 6 shown in Fig. 1 is positioned vertically. However, it is noted that the conduit 6 may be positioned in any position, such as horizontal, vertical, diagonal, etc.

In the embodiment shown the throttle body 11 and the conduit 6 both have a circular cross section. The conduit 6 preferably has a diameter in the range of 6-12 millimetres, preferably is 10 millimetres. In an alternative embodiment for providing large volumes of beverage, for example suitable for filling jugs or thermos flasks, the diameter of the conduit may be larger.

In an alternative embodiment, the cross section of the conduit and or the throttle body may have any other shape, for example rectangular or triangular. For example a throttle body with a triangular cross section can be used in combination with a conduit having a rectangular cross section. In such a combination the first flow through area formed between the outer circumference of the throttle body and the inside circumference of the conduit is relatively large, and especially suited for an apparatus in which the fluid is transported under high pressure through the conduit.

In the embodiment shown the throttle body 11 is provided with one circular opening 16, forming the second flow through area. This opening preferably has a diameter in the range of 1,5-2,5 mm, preferably is 1,2 mm. In an alternative embodiment the throttle body may comprise multiple openings, and/or the seat may be provided with multiple openings, which openings together form the second flow through area. By providing multiple openings, the time needed for the intermediate beverage product to pass the conduit is reduced. Furthermore, when an opening is blocked, for example by pieces of coffee granulate, the intermediate beverage product may still be passed via the other openings and the conduit is not blocked. In a preferred embodiment, the openings are shaped and positioned in the conduit such that they generate turbulence in the flow of intermediate beverage product passing through the second flow through area.

A pressure means in the form of a pump can be provided (not shown) for transporting the intermediate beverage product through the conduit 6 at a low overpressure, for example the intermediate beverage product may enter the conduit 6 at an overpressure of 0,5 bar. Thus the intermediate beverage product enters the conduit 6 at an overpressure of 0,5 bar.

In a preferred embodiment, the mixing chamber is connected to the inlet of the conduit, and the overpressure is generated by the preparation action itself, e.g. by a mixer mixing starting elements into the intermediate beverage product.

It is noted that the pressure in the conduit of an apparatus according to the invention is substantially lower than the pressure generated in the conventional high pressure apparatuses for producing a cream layer on a beverage, in which the overpressure might amount up to 9 to 15 bar.

In an alternative embodiment, the conduit comprising the throttle body is mounted in vertical position and the intermediate beverage product is flows through the conduit by using gravity. To prevent the throttle body from moving into the throttle position when a cleaning fluid is transported via the conduit, means for supporting the throttle body in the rest position may be provided. For example a moveable pin may be provided, the pin extending at least partially in the conduit in a blocking position for preventing the throttle body to move from the rest position when a cleaning fluid or the first part of an intermediate beverage product is transported under pressure via the conduit. For example a control unit may retract the pin, thus allowing the throttle body to move into the throttle position, when a first part of the intermediate beverage product has passed through the conduit.

In the preferred embodiment shown, the resilient body 14 is a spring, which is a low cost and reliable component. In an alternative embodiment the resilient body can for example also be a piston or a piece of resilient material for example rubber cylinder. Preferably, the resilient body also supports the throttle body in a direction angular to the axial direction of the conduit. In an alternative embodiment, the throttle body may be supported by a guiding system, for example formed by a linkage system, or may the peripheral edge comprise sections which extend in a radial direction for supporting the throttle body on the inside surface of the conduit.

In an alternative embodiment, the throttle body is hingeably connected to the conduit wall for hinging between the rest position in which the body is at a first angle with the flow direction and extending in the counter flow direction, and the throttle position in which the body is at a second angle with the axis of the conduit, and wherein the second angle is larger than the first angle. For example, the throttle body may have the form of a plastic strip or a lip of a rubber material of which the rubber functions as a hinge and as a resilient body. One end of the strip is attached to the wall of the conduit, and its opposite free end extends at an angle with the wall such that the strip extends mainly in, though at an angle with, the counter flow direction. Thus, the free end forming the throttle body or valve extends in and at an angle with the counter flow direction, the end of the lip positioned at a distance from the wall of the conduit. Thus, the end of the lip or strip is moved into the throttle position under the influence of an intermediate beverage product passing through the conduit. The resilient properties of the material force the valve back into the rest position when the intermediate beverage product has passed.

In an further alternative embodiment, the conduit may for example be made of a flexible material, such as for example a rubber tube, of which the flow through area may be reduced in a radial direction by compressing a section of the tube in a radial direction by using pinching means, for example a clamp. In such an embodiment no moving parts such as a throttle body are needed within the conduit. The flow through area reduction means are positioned outside the passage and therefore need not to be resistant against hot, fat etc fluids. Furthermore such a conduit is easy to clean since it comprises no complicated and/or moving parts. Such an embodiment may for example comprise a control unit and activating means for activating the pinching means, and sensor means for detecting if the first part of the intermediate beverage product has passed the first passage, and signalling such to the control means.

In an embodiment according to the invention, the seat extends towards the centre of the conduit. The seat may extend along the entire inside circumference or along at least part of the inside circumference, for example at regular intervals, for supporting at least part of the peripheral edge of the throttle body.

It is noted that the conduit and the throttle body are shaped such that they do not block the entire flow through area. When in the throttle position, the conduit limits but does not block the flow of intermediate beverage product.

In a further preferred embodiment according to the invention, the second flow through area and the conduit are shaped for in combination generating turbulence in the second part of beverage product passing the second flow through area, for braking down bubbles in the second part of beverage product into smaller bubbles. For example, the second flow through area may be positioned centrally in the conduit of which the cross section directly downstream of the second flow through area is larger than the second flow through area, such that the flow of intermediate beverage product widens after passing the second flow through area, generating turbulence. In a further embodiment, a section of the conduit directly following the second flow through area may be provided with an non symmetrical cross section.Within the scope of the present invention, many embodiments other than those described above to illustrate the present invention are conceivable. For instance the distance between the rest position and the throttle position and/or the flexibility of the resilient body can be adjusted in relation to the type of beverage, the volume of the intermediate beverage product, the viscosity of the intermediate beverage product, etc. Thus the force and or time needed to move the throttle body into the throttle position can be adjusted to the type and volume of the intermediate beverage product. Also, the first and/or second flow through area may be rectangular shaped, oval shaped, etc when seen in the flow direction.

## Claims

1. Method for preparing at ambient pressure a beverage having a cream top layer, in particular a beverage such as coffee or chocolate milk, the method comprising the steps of:
preparing an intermediate beverage product by mixing beverage starting elements;
providing a conduit (6), the conduit extending in an axial direction between an inlet (8) and an outlet (9) for transporting the intermediate beverage product from the inlet to the outlet in a flow direction (10), the conduit defining a passage allowing the intermediate beverage product to pass;
transporting a first part of the intermediate beverage product at ambient pressure via the conduit (6) and through a first flow though area in the flow direction (10);
reducing the passage in the conduit from the first flow through area to a second flow through area of a predetermined size and shape, which second flow through area has a size which is smaller than the size of the first flow through area, and is shaped such that it enables small sized bubbles for forming a cream top layer to pass through the passage while large sized bubbles are broken down into small sized bubbles fit for forming a cream top layer and for passing through the passage;
transporting a second part of the intermediate beverage product at ambient pressure via the conduit (6) and through the second flow through area in the flow direction; and
combining the first and second part thus treated for creating a beverage having a cream top layer.

2. Method according to claim 1, wherein the second flow through area and the conduit are shaped for in combination generating turbulence in the second part of beverage product passing the second flow through area, for braking down bubbles in the second part of beverage product into smaller bubbles.

3. Method according to claim 1 or 2, wherein the conduit is made out of a flexible material, for example rubber, and the passage in the conduit is reduced from the first flow through area to the second flow through area by pinching the conduit.

4. Method according to claim 1 or 2, wherein the passage in the conduit is reduced from the first flow through area to the second flow through area by moving a throttle body within the conduit from a rest position defining the first flow through area into a predetermined throttle position, defining the second flow through area.

5. Method according to claim 4, wherein the throttle body is moved into the throttle position under a force applied to the throttle body by the first part of the intermediate beverage product flowing via the conduit in the flow direction.

6. Apparatus for preparing a beverage at an ambient pressure having a cream top layer, in particular a beverage such as coffee or chocolate milk, comprising:
a mixing chamber for preparing an intermediate beverage product by mixing beverage starting elements, for example coffee and milk powder,
a conduit (6) preferably having a circular cross section, which conduit extends in an axial direction between an inlet (8) and an outlet (9) for transporting a fluid from the inlet to the outlet in a flow direction (10), said conduit defining a passage allowing the intermediate beverage product to pass; and
means for reducing the passage in the conduit (6) from the first flow through area to a second flow through area of a predetermined size and shape, which second flow through area has a size which is smaller than the size of the first flow through area, and is shaped such that it enables small sized bubbles for forming a cream top layer to pass through the passage while large sized bubbles are broken down into small sized bubbles fit for forming a cream top layer and for passing through the passage.

7. Apparatus according to claim 6, wherein the second flow through area and the conduit are shaped for in combination generating turbulence in the second part of beverage product passing the second flow through area, for braking down bubbles in the second part of beverage product into smaller bubbles.

8. Apparatus according to claim 6 or 7, wherein the means for reducing the passage comprise a throttle body (11) preferably having a circular cross section, which throttle body is moveable supported for movement between a rest position in which the throttle body defines a passage in the conduit (6) having the first flow through area, and a throttle position in which the throttle body (11) defines a passage in the conduit (6) having the second flow through area,

9. Apparatus according to claim 8, wherein the throttle body (11) is moveable supported within the conduit (6) for movement between the rest position and the throttle position, which throttle position is situated downstream of the rest position.

10. Apparatus according to claim 9, comprising a resilient body (14), preferably a spring, for resiliently supporting the throttle body (11), at least exerting a force on the throttle body (11) for moving it towards the rest position when said throttle body (11) is in a position downstream of the rest position.

11. Apparatus according to claim 10, wherein the resilient body is designed such that the throttle body (11) is moved towards the throttle position under the pressure of an intermediate beverage product flowing through the conduit (6).

12. Apparatus according to one of the claims 7-11, wherein the throttle body (11) comprises at least one opening (16) for defining at least part of the second flow through area.

13. Apparatus according to one of the claims 8-12, wherein the conduit comprises a seat (15) for supporting the throttle body (11) when in the throttle position, which seat (15) extends along at least part of the inside surface (13) of the conduit (6) for supporting at least part of the peripheral edge (12) of the throttle body (11).

14. Apparatus according to claim 13, wherein the throttle body (11) is moveable supported in the conduit (6) for movement in an axial direction of the conduit between the rest position and the throttle position downstream of the rest position, and the throttle body (11) extends in a direction perpendicular to the axial direction of the conduit (6) for blocking part of the conduit (6) and wherein
the throttle body, when in the rest position, defines a passage between the peripheral edge (12) of the throttle body (11) and the inside surface (13) of the conduit (6), the passage having the first flow through area; and
the throttle body (11), when supported by the seat (15) in the throttle position, defines a passage having the second flow through area which is smaller than the first flow through area.

15. Apparatus according to one of the claims 6-14, wherein the throttle body is hingeably connected to the conduit wall for hinging between the rest position in which the body is at a first angle with the axis of the conduit, and the throttle position in which the body is at a second angle with the axis of the conduit, and wherein the second angle is larger than the first angle.

16. Apparatus according to claim 6, wherein the conduit is made of a flexible material, for example rubber, and the means for reducing the passage in the conduit comprise external pinching means designed in such a way as to exert a force to the external periphery of the conduit for reducing the passage.
